# EUROPEAN PATENT APPLICATION

(11) **EP 2 172 684 A1**
(43) Date of publication of application: **07.04.2010**
(21) Application number: 09252331.5
(22) Date of filing: 30.09.2009
(51) Int. Cl.: F16L 1/00

(54) **Device and method for pipe pushing and handling**

(30) Priority: 01.10.2008 GB 0817985
(71) Applicant: Steve Vick International Ltd, Bath BA2 3QS (GB)
(72) Inventor: Harrison, Andrew, Bath BA28 2RF (GB); Robinson, Nicholas Stephen, Bath BA3 3QA (GB)
(74) Representative: Stuart, Ian Alexander

(57) **Abstract**

Apparatus 100 and corresponding methods for pipe pushing and/or handling in which the auxiliary supply lines of an excavator are used to power a hydraulic clamp for gripping the pipe, and the articulated arm of the excavator is used for manoeuvring the pipe. Such apparatus includes: a pair of jaws 10 having cooperating pipe-gripping surfaces 12; a hydraulic ram 30 coupled to the jaws 10 and capable of actuating the jaws 10 to grip a pipe between the pipe-gripping surfaces 12; a connection portion 40 arranged to connect the apparatus 100 to an articulated arm of the excavator; and a hydraulic fluid distributor 210,220 arranged to distribute pressurised hydraulic fluid from auxiliary hydraulic supply lines of the excavator to the hydraulic ram 30. Thus, when the apparatus is connected to an excavator the jaws 10 can be actuated by control of the supply of pressurised hydraulic fluid from the auxiliary supply lines of the excavator, and the apparatus 100 (and pipe) can be moved by control of the position and orientation of the excavator arm.

## Description

The present invention relates to apparatus and methods for pipe pushing and/or pipe handling, in particular to apparatus and methods using hydraulic power.

It is standard practice in many countries, including the UK, to replace old utilities (e.g. gas or water) pipes which are no longer fit for purpose by inserting new pipe - typically polyethylene pipe - within the existing pipe and subsequently decommissioning the existing pipe. This technique avoids the need to dig up the old pipe, a process which can be both expensive and inconvenient.

In the process, a trench is dug at one end of the new pipe run, a section of the old pipe within the trench is removed (if the installation is "live" a bypass route for the gas/water/etc. is installed), and the new pipe is inserted through the old pipe via the trench. Insertion of the new pipe is typically carried out using a "pipe pushing machine". Such machines may be sited within the trench or on the edge of the trench, and are typically pneumatically or hydraulically powered. This method is much less hazardous than known manual methods in which pipe pushing is performed using a lifting sling and suitable hoist, since these manual methods require an operator to remain in the trench with the slung pipe.

However, a disadvantage of most known pipe pushing machines is that they must be anchored to the ground by way of stakes. This is a laborious process, and carries an inherent risk that another utility line - such as a cable or pipe - may be accidentally breached. GB2417304 discloses a pipe pushing machine which attempts to solve this problem. The disclosed apparatus is a mechanical clamp which is operated by an excavator (digger). The hydraulically powered excavator arm is used to push a lever in order to activate the mechanical clamp so that it grips the pipe, and then lifting and moving the pipe in its lengthwise direction using the lever.

In addition to the requirement to manoeuvre new pipe into an existing supply pipe, it is often also necessary to manoeuvre the new pipe around the installation site. For example, it is sometimes necessary to arrange the ends of two sections of pipe so that they can be butt-fused together to form one longer pipe. Such pipe handling is typically carried out using lifting straps slung from e.g. the arm of an excavator, a process which is both labour-intensive and hazardous.

At its most general, the present invention provides apparatus and corresponding methods for pipe pushing and/or pipe handling in which the auxiliary hydraulic supply lines of an excavator are used to power a hydraulic clamp for gripping the pipe and the articulated arm of the excavator is used for manoeuvring the pipe.

The invention proposes a pipe pushing apparatus having: one or more pairs of jaws, the or each pair of jaws having cooperating pipe-gripping surfaces, typically curved; one or more hydraulic rams coupled to the jaws and capable of actuating the jaws to grip a pipe between the pipe-gripping surfaces; a connection portion adapted to connect the apparatus to an excavator arm; and a hydraulic fluid distributor adapted to distribute pressurised hydraulic fluid from auxiliary hydraulic supply lines of the excavator to the one or more hydraulic rams.

Thus, when the apparatus is connected to an excavator the jaws can be actuated by control of the supply of pressurised hydraulic fluid from the auxiliary supply lines and the apparatus (and pipe) can be moved by control of the position and orientation of the excavator arm.

The jaws are preferably each rotatable about a pivot above the pipe-gripping surfaces. Thus, the jaws can rotate in a substantially vertical plane, and the pipe-gripping surfaces can move relative to one another in a substantially horizontal plane. This arrangement means that the pipe-gripping surfaces grip the sides (rather than the top and bottom surfaces) of a pipe to be pushed or moved, and that the apparatus approaches the pipe from above. This is particularly advantageous when a pipe to be gripped is located in a trench, particularly a narrow trench.

In preferred arrangements the jaws each have a first end portion which is connected to (and can be pushed or pulled by) the or a hydraulic ram and a second end portion which carries the pipe-gripping surface, and are each pivotable about a pivot between the first and second end portions. The rams therefore do not get in the way of the pipe-gripping surfaces.

The cooperating pipe-gripping surfaces preferably each have an arcuate cross-section, i.e. a cross-section in the shape of a segment, or arc, of a circle. They are preferably arranged relative to one another so that, in a pipe-gripping configuration, the surfaces lie on the circumference of the same circle. The diameter of the circle is chosen according to the outer diameter of the pipe to be pushed/moved. For example, the radius of curvature of the pipe-gripping surfaces may be substantially equal to the outer radius of the pipe to be gripped. In typical applications, the radius of curvature of the pipe-gripping surfaces will be 55mm or more and/or 1000mm or less.

In some embodiments each jaw includes a removable and replaceable jaw liner which carries the pipe-gripping surface. In this way, the jaw liners of the apparatus can be selected according to the diameter of the pipe to be pushed/moved. The apparatus may be supplied with a kit comprising a plurality of pairs of jaw liners, each pair having pipe-gripping surfaces with a different radius of curvature.

The connection between the connection portion of the apparatus and the excavator arm is a rigid mechanical connection to enable full manipulation of the apparatus by the excavator arm. Typically, this connection will be effected as between conventional excavator attachment modules (e.g. excavator buckets, grapples etc.) and excavator arms. There is no uniform standard for such connections; instead, manufacturers of excavators typically each have their own standard of connection which they employ on their products. In general the excavator attachment module has an attachment unit with two horizontal pins mounted rigidly between vertical side plates so that the pins are parallel to one another. The excavator arm (or a "quick coupler" device attached to the excavator arm) has corresponding hooked portions which hook around the parallel pins in order to lock the attachment module to the excavator arm. However, the distance between the parallel pins/hooked portions varies between manufacturers, and even within the product ranges of a single manufacturer. It is therefore essential that the connection portion of the present invention be configured so as to conform to the standard of the excavator to which it is to be connected.

In some embodiments the connection portion includes two upstanding wall brackets which rigidly support between them two parallel pins. Alternatively, the connection portion may be a plate to which a bracket carrying means (such as a quick coupler device) for connection to an excavator arm can be affixed.

It is preferred that the connection portion of the present invention be rotatable relative to the jaws of the apparatus. Such rotation, which is desirably in a horizontal plane, enables the orientation of the apparatus relative to the excavator arm to be altered. For example, in a pipe pushing configuration it is desirable that the connection portion is located relative to the jaws so that the longitudinal direction of the apparatus (the direction of the longitudinal axis of the gripped pipe) is aligned with a vertical plane through the articulated arm. In a pipe handling configuration it is desirable that the connection portion is located relative to the jaws so that the longitudinal direction of the apparatus is substantially perpendicular to a vertical plane through the articulated arm. The connection portion preferably includes a locking mechanism for locking the connection portion in a particular position relative to the jaws. The locking mechanism may include a detent in a fixed position relative to the jaws and a drop bolt capable of being deployed via an opening in a base plate of the connection portion to engage with the detent so as to locate the connection portion relative to the jaws. the locking mechanism may include a plurality of detents, each for locating the connection portion in a different orientation relative to the jaws. Typically, the locking mechanism includes two detents, one capable of locating the connection portion in a pipe-pushing configuration, the other capable of locating the connection portion in a pipe handling configuration.

The hydraulic fluid distributor preferably has first and second hoses for releasably connecting to corresponding auxiliary line couplings of the auxiliary hydraulic system of an excavator. In embodiments in which the or each hydraulic ram is a push-pull cylinder, the first hose of the distributor is preferably arranged to distribute pressurised fluid from one of the auxiliary lines to a first end of the or each ram; and the second hose is arranged to distribute fluid from the other of the auxiliary lines to a second end of the or each ram. Thus, one of the first or second hoses supplies pressurised fluid to the piston rod side chamber of the or each ram and the other of the first or second hoses supplies pressurised fluid to the bottom chamber. In embodiments having more than one hydraulic ram the distributor acts as a manifold and distributes pressurised fluid from one supply hose to the piston rod side chamber (first end) of each ram and fluid from the other supply hose to the bottom chamber (second end) of each ram.

The apparatus may have two or more pairs of jaws with cooperating curved pipe-gripping surfaces. In such embodiments the pipe-gripping surfaces of the respective pairs of jaws are aligned with one another. Where the pipe-gripping surfaces are arcuate in cross-section the centres of the arcs (circle centres) of the surfaces are preferably co-aligned. It is particularly preferred that the cooperating pipe-gripping surfaces of each pair of jaws be disposed on common opposing curved jaw liners.

The invention also encompasses an excavator for pipe pushing and/or pipe handling, having an articulated arm rigidly connected to the connecting portion of the pipe pushing apparatus according to the above proposal and auxiliary supply lines connected to the hydraulic fluid distributor of the pipe pushing apparatus. Also encompassed is a method of pushing and/or handling pipe using such an excavator.

Also proposed is a kit including the above-described pipe pushing apparatus and a plurality of pairs of removable and replacable jaw liners, each pair having pipe-gripping surfaces defining an arcuate cross-section of a different curvature.

An embodiment of the invention will now be described in greater detail with reference to the accompanying drawings, in which:
Fig. 1 is an isometric view of a pipe pushing machine according to an embodiment of the present invention;
Fig. 2 is an isometric view of the pipe pushing machine of Fig. 1 connected to an excavator arm (hydraulic supply lines omitted for clarity); and
Fig. 3 is an isometric view of the pipe pushing machine and excavator arm of Fig. 2 with a schematic representation of the hydraulic fluid supply system.

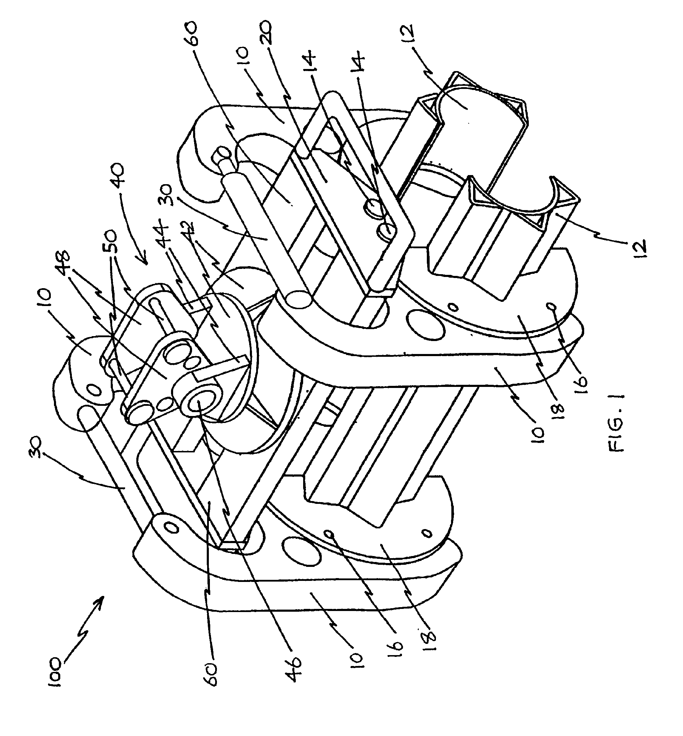

The pipe pushing machine 100 shown in Figs. 1 to 3 has two pairs of jaws 10 supporting between them two cooperating pipe-gripping shells 12. The jaws 10 are each approximately 'E' shaped, with a main upright backbone and three branches projecting from the backbone in the same direction. Each pair of jaws 10 is arranged so that their branches extend towards one another. The shells 12 are cradled between the lowermost and middle branches, and the middle branches are pivoted to the main frame 20 via pivots 14. The upper branches of each pair of jaws 10 are connected together by a hydraulic ram 30 (hydraulic cylinder). Thus, contraction of the rams 30 causes the upper branches of each respective pair of jaws 10 to move towards one another so that the jaws 10 rotate around the pivots 14 and the consequent lever action causes the shells 12 to move away from one another (to release a gripped pipe). Conversely, expansion of the rams 30 causes the upper branches of each respective pair of jaws to move away from one another and consequent lever action causes the shells to move towards one another (to grip a pipe).

The pipe-gripping surfaces of the shells 12 are semicylindrical in shape and arcuate in cross-section. Each shell 12 is substantially longer in the longitudinal direction (the direction of the longitudinal axis of a gripped pipe (not shown)) than it is high or wide. There is thus a large surface area for gripping a pipe. The gripping surface may have a patterned or roughened surface to further improve traction. The shells 12 are removable and replaceable so that different sized pipes can be accommodated by a single pipe pushing machine 100. The shells 12 can be removed by unfastening of the bolts 16 which secure the flanges 18 which extend from the outer surface of the shells 12 to the backbone, middle and lower branches of the jaws 10.

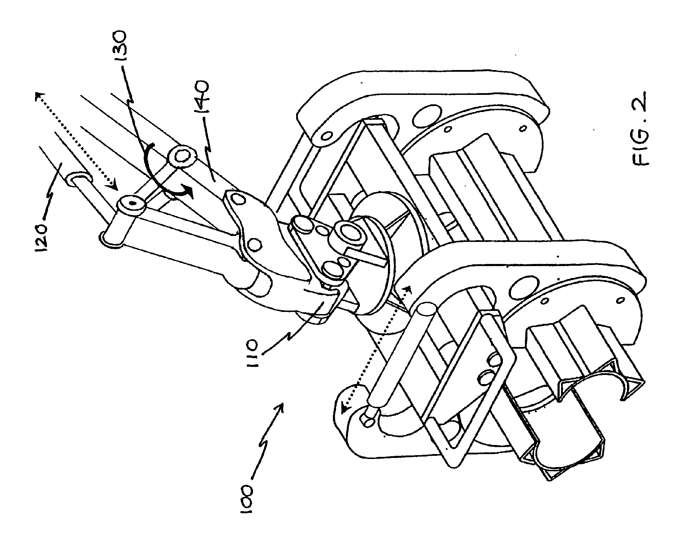

The pipe pushing machine 100 also has a digger arm attachment unit 40 which comprises a base plate 42 seated on the main frame 60 of the machine 100. The base plate 42 is mounted on a bearing (not shown) which enables it to rotate laterally relative to the main frame 60. The base plate 42 can be locked in a desired position relative to the frame 60 as described below. A pair of upstanding parallel side wall brackets 44 is mounted on the base plate 42 and rigidly support between them a hoist pin 46. The hoist pin 46 supports parallel pin brackets 48 which rigidly support between them, and above the hoist pin 46, parallel link pins 50 to which corresponding hooks 110 of an articulated excavator arm 200 can be locked (see Fig. 2).

As can be seen best from Fig. 2, the excavator arm 200 has a hydraulic ram 120, contraction and expansion of which enables the pipe pushing machine 100 to be tilted fore and aft as indicated by the arrow at 130. The hoist pin 46 provides for free tilting of the machine 100 during pipe-pushing to enable the jaws 10 to automatically align with the pipe being pushed. Where such self alignment is undesirable a detent pin (not shown) can be engaged with a corresponding detent (not shown) in the hoist pin 46 to prevent rotation of the pin brackets 48 relative to the side wall brackets 44.

The pipe pushing machine 100 can also be moved left, right, up and down by movement of the excavator arm 200 itself. If it is desired to rotate the machine 100 to the left and right (i.e. to achieve roll) or to manoeuvre pipe (not shown) oriented at a right angle to the excavator then the digger arm attachment unit 40 can be rotated laterally relative to the main frame 30 through ninety degrees. The digger arm attachment unit 40 can be locked in the new position via a drop bolt (not shown) which passes through the base plate 42 and engages with a detent (not shown) in the main frame 60. The drop bolt can also engage with a second detent (not shown) to lock the attachment unit 40 in the position shown in Figs. 1 and 2.

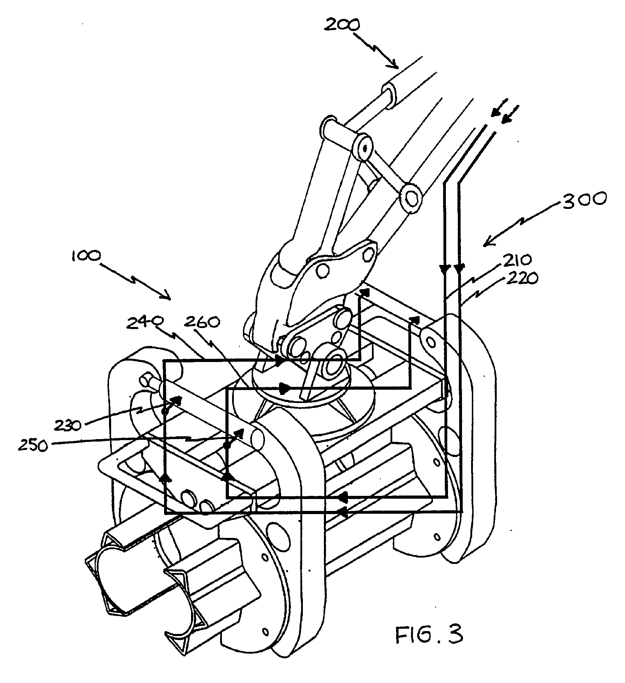

Fig. 3 shows, schematically, the hydraulic fluid supply system 300. The system 300 includes first 210 and second 220 supply hoses which are each connected to one of the auxiliary supply lines (not shown) of the excavator arm 200. The first supply hose 210 is connected to the piston rod side chambers (not shown) of the rams 30 via first ram distribution hoses 230, 240. The second supply hose 220 is connected to the bottom chambers (not shown) of the rams 30 via second ram distribution hoses 250, 260.

In order to push a length of pipe (not shown) through an existing pipeline, the pipe pushing machine 100 is oriented relative to the excavator arm 200 as shown in Fig. 2, i.e. with the longitudinal axis of the machine 100 aligned with the boom arm 140 of the arm 200. To close the jaws 10 to grip the pipe between the shells 12 pressurised hydraulic fluid from the auxiliary supply of the excavator is supplied to the bottom chambers (not shown) of the rams 30 via the first supply hose 210 and first ram distribution hoses 230, 240. The rams 30 then extend as the pistons (not shown) are forced along their respective cylinders, the upper branches of the jaws 10 are pushed apart and the jaws 10 pivot around the pivots 14. The excavator arm 200 is then manipulated in order to push (or pull) the machine 100 (and pipe) along its longitudinal axis. Once the machine 100 (and pipe) has been moved as far as the articulation of the excavator arm 200 allows, the pipe is released by supply of pressurised hydraulic fluid to the piston rod side chambers of the rams 30 via the second supply hose 220 and second ram distribution hoses 250, 260. The process is then repeated until the desired insertion depth has been achieved.

To use the pipe pushing machine 100 to manoeuvre a length of pipe (not shown) around e.g. a site, the drop bolt (not shown) extending through an opening (not shown) in the base plate 42 of the digger arm attachment unit 40 is disengaged from the detent (not shown) in the main frame 60 of the machine. The base plate 42 is then rotated on the bearing (not shown) through ninety degrees so that the longitudinal axis of the machine 100 is perpendicular to the boom arm 140 of the excavator arm 200. The drop bolt is then engaged with a further detent (not shown) to lock the digger arm attachment unit 40 in this new orientation. The jaws 10 are closed and opened as described above.

## Claims

1. Pipe pushing apparatus (100) for connection to an excavator, the apparatus having:
a pair of jaws (10) having cooperating pipe-gripping surfaces (12);
a hydraulic ram (30) coupled to the jaws (10) and capable of actuating the jaws to grip a pipe between the pipe-gripping surfaces (12);
a connection portion (40) arranged to connect the apparatus (100) to an articulated arm of the excavator; and
a hydraulic fluid distributor (210,220) arranged to distribute pressurised hydraulic fluid from auxiliary hydraulic supply lines of the excavator to the hydraulic ram (30).

2. Apparatus according to claim 1, wherein the jaws (10) each have a first end portion which is connected to the hydraulic ram (30) and a second end portion which carries the pipe-gripping surface (12), and are each pivotable about a pivot (14) between the first and second end portions.

3. Apparatus according to claim 1 or claim 2, wherein the cooperating pipe-gripping surfaces (12) each have an arcuate cross-section.

4. Apparatus according to any of claims 1 to 3, wherein each jaw (10) includes a removable and replaceable jaw liner (12) which carries the pipe-gripping surface.

5. Apparatus according to any of claims 1 to 4, wherein the connection portion is rotatable relative to the jaws.

6. Apparatus according to any of claims 1 to 5, wherein the connection portion includes a locking mechanism for locking the connection portion in a given orientation relative to the jaws.

7. Apparatus according to any of claims 1 to 6, wherein the hydraulic fluid distributor has first and second hoses connectable to corresponding auxiliary line couplings of the auxiliary hydraulic supply lines of the excavator.

8. Apparatus according to claim 7, wherein the first hose of the hydraulic fluid distributor is arranged to distribute pressurised fluid from one of the auxiliary hydraulic supply lines to a first end of the ram, and the second hose is arranged to distribute fluid from another of the auxiliary hydraulic supply lines to a second end of the ram.

9. Apparatus according to any of claims 1 to 8, including a further pair of jaws having cooperating curved pipe-gripping surfaces.

10. Apparatus according to claim 9, including two removable and replaceable jaw liners, each jaw liner carrying the pipe-gripping surface of one jaw of each pair of jaws.

11. An excavator for pipe pushing and/or pipe handling having an articulated arm rigidly connected to the connecting portion of the pipe pushing apparatus according to any of claims 1 to 10, and auxiliary hydraulic supply lines connected to the hydraulic fluid distributor of the pipe pushing apparatus.

12. A kit of parts including pipe pushing apparatus according to any of claims 1 to 10 and a plurality of pairs of removable and replacable jaw liners, each pair of jaw liners having pipe-gripping surfaces defining an arcuate cross-section of a different curvature.

13. A method of pushing and/or handling a length of pipe using the apparatus of any of claims 1 to 10, the method including the steps of:
connecting the connection portion of the apparatus to an articulated arm of an excavator;
connecting the hydraulic fluid distributor of the apparatus to auxiliary hydraulic supply lines of the excavator;
distributing pressurised hydraulic fluid from the auxiliary hydraulic supply lines to the hydraulic ram to actuate the jaws to grip the pipe between the pipe-gripping surfaces; and
manipulating the articulated arm to move the pipe.
